# EUROPEAN PATENT APPLICATION

(11) **EP 4 815 397 A1**
(43) Date of publication of application: **30.09.2026**
(21) Application number: 26152815.2
(22) Date of filing: 20.01.2026
(51) Int. Cl.: H04L 45/02, H04L 45/16, H04L 45/00, H04L 45/48, H04L 45/03, H04L 45/484

(54) **FORWARDING TOPOLOGY FOR BUM TRAFFIC IN NETWORK DEVICE AGGREGATION GROUP**

(30) Priority: 28.03.2025 US 202519094113
(71) Applicant: Arista Networks, Inc., Santa Clara, CA 95054 (US)
(72) Inventor: Birmiwal, Sharad, Santa Clara, CA, 95054 (US); Ilangovan, Vivek, Santa Clara, CA, 95054 (US); Sekar, Arunprakash, Santa Clara, CA, 95054 (US); Bailey, Scott William Hill, Santa Clara, CA, 95054 (US); Grewal, Avininderpal Singh, Santa Clara, CA, 95054 (US); Singh, Harsimran, Santa Clara, CA, 95054 (US)
(74) Representative: Hoffmann Eitle

(57) **Abstract**

A network device may be configured to execute a link-state protocol to obtain link-state information identifying links defining a physical topology of a set of network devices including the network device. The network device may be configured to obtain a minimal spanning tree for the physical topology based on the link-state information. The network device may be configured to obtain a floodset for handling BUM traffic, e.g., for a broadcast domain or for a multicast group, based on the minimal spanning tree.

## Description

This application claims priority to U.S. patent application No. 19/094,113, filed March 28, 2025, which is hereby incorporated by reference herein in its entirety.

### Background

A communication system can include network devices that are interconnected to form a network for conveying network traffic from source devices to destination devices. Network devices should be configured to appropriately handle broadcast, unknown unicast, and/or multicast (BUM) traffic.

In some network implementations, some network devices can be stackable network switches. A set of stackable network switches can be configured to operate as if it were a single device (e.g., from the perspective of an entity outside of the network switch stack, from the management perspective, with ports of the individual switches operating as ports of the single device, etc.).

### Brief Description of the Drawings

FIG. 1 is a diagram of an illustrative networking system that includes network devices in a network device aggregation group in accordance with some embodiments.
FIG. 2 is a diagram of an illustrative network device in accordance with some embodiments.
FIG. 3 is a diagram of illustrative traffic flooding in a network device aggregation group in accordance with some embodiments.
FIG. 4 is a diagram of illustrative network device control circuitry configured to generate floodset(s) based on link-state information in accordance with some embodiments.
FIG. 5 is a diagram of illustrative link-state information in accordance with some embodiments.
FIG. 6 is a diagram of an illustrative minimal spanning tree in accordance with some embodiments.
FIG. 7 is a diagram of illustrative floodset information for a broadcast domain in accordance with some embodiments.
FIG. 8 is a diagram of illustrative floodset information for a multicast group in accordance with some embodiments.
FIG. 9 is a diagram of an illustrative minimal spanning tree based on differing link costs in accordance with some embodiments.
FIGS. 10A and 10B are diagrams of illustrative topologies for network device aggregation groups in accordance with some embodiments.
FIG. 11 is a flowchart of illustrative operations for facilitating broadcast, unknown unicast, and/or multicast (BUM) traffic handling in accordance with some embodiments.

### Detailed Description

A network may include numerous interconnected network devices that process network traffic in a desired manner. In particular, network devices should be configured to appropriately handle (e.g., replicate, forward, and/or perform other operations on) broadcast, unknown unicast, and/or multicast (BUM) traffic. As an example, mechanisms such as those provided based on a spanning tree protocol (STP) may help eliminate loops in the forwarding topology such that BUM traffic can be appropriately handled (e.g., with no undesired delivery of duplicated traffic, with no packet storm, etc.). As another example, mechanisms such as those provided based on a protocol independent multicast (PIM) protocol may help distribute packets for multicast traffic (e.g., from a source to multiple receivers for a given multicast group).

In some illustrative network configurations, it may be undesirable (or even not practically possible) for network devices to provide these types of mechanisms (e.g., given network device constraints, given the operational and maintenance overhead of executing the corresponding protocol(s) and generally providing these mechanisms, etc.). In some instances, it may generally be desirable to provide other mechanisms for appropriately handling BUM traffic.

Accordingly, in illustrative embodiments described herein, a network device (e.g., control plane processing circuitry thereof) may be configured to maintain link-state information in a link-state database (e.g., based on execution of a link-state (routing) protocol such as an open shortest path first (OSPF) protocol or an intermediate system-to-intermediate system (IS-IS) protocol), may be configured to obtain a minimal spanning tree based on the link-state information, and may be configured to obtain floodset(s) for different broadcast domain(s) and/or different multicast group(s) that are used to appropriately process BUM traffic.

In some illustrative configurations described herein as an example, the network device may be a given network device (e.g., a network device with a supervisor role) of multiple network devices forming a network device aggregation group. The given network device may receive link-state messages (e.g., link-state advertisements or other protocol messages) from other members (e.g., network devices with a worker role) of the network device aggregation group to maintain the link-state information and may distribute the obtained floodset(s) to other members of the network device aggregation group (e.g., such that remote packet processors of the other members may be configured to use the floodset(s) to appropriately process BUM traffic). These examples in connection with network devices in a network device aggregation group are merely illustrative. If desired, other types of network device may similarly generate floodset(s), based on link-state information, to construct a forwarding topology for BUM traffic or generally to facilitate BUM traffic handling.

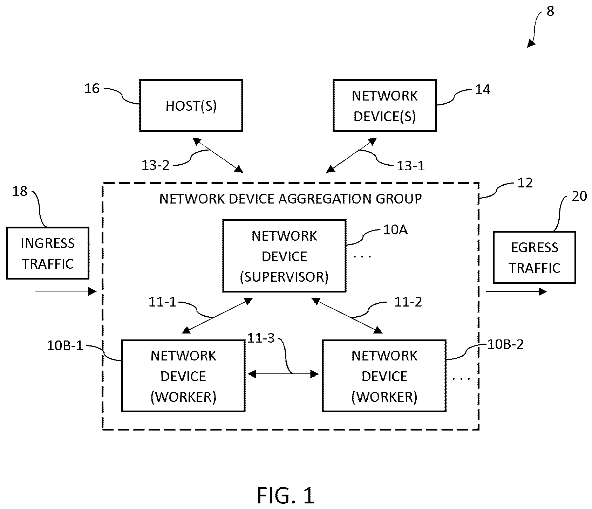

An illustrative network 8 that includes network devices configured to facilitate BUM traffic handling (e.g., a network device configured to generate floodset(s) based on link-state information as described above) is shown in FIG. 1. Network 8 may have any suitable scope. As examples, network 8 may include, be, and/or form part of one or more local segments, one or more local subnets, one or more local area networks (LANs), one or more virtual local area networks (VLANs), one or more campus area networks, one or more metropolitan area networks, one or more wide area networks, one or more datacenter networks, one or more cloud networks, etc. Network 8 may include a wired network (portion) based on wired technologies or standards such as Ethernet (e.g., using copper cables and/or fiber optic cables) and, if desired, may include wireless network portion(s) such as one or more wireless local area networks (WLANs) provided by wireless access point(s). If desired, network 8 may include internet service provider networks (e.g., the Internet) or other public service provider networks, private service provider networks (e.g., multiprotocol label switching (MPLS) networks), and/or other types of networks such as telecommunication service provider networks.

Network 8 may be implemented using and include network devices that handle (e.g., process by switching, routing, modifying, forwarding, etc.) network traffic to convey information for user applications between end hosts and/or for other applications, services, and functions generally between devices (e.g., network devices and/or end host devices). Network 8 may include networking equipment forming a variety of network devices that interconnect end hosts of network 8. As examples, network devices of network 8 may include one or more network switches (e.g., single-layer (Layer-2) switches, multi-layer (Layer-2 and Layer-3) switches, etc.), one or more bridges, one or more routers, one or more gateways, one or more hubs, one or more wireless access points, one or more repeaters, one or more firewalls, one or more devices serving other networking functions, one or more devices that include the functionality of two or more of these devices, and/or management equipment that manages and controls the operation of one or more of other network devices.

In some illustrative configuration sometimes described herein as an example, network 8 may include network devices 10 (e.g., network devices 10A, 10B-1, 10B-2, etc.) and network device(s) 14. Network devices 10 may be configured to form a network device aggregation group (e.g., implementing a network device stack for a network stacking application, implementing another type of single (logical) network device instance for other applications, etc.). In the example of FIG. 1, network device aggregation group 12 (sometimes referred to as a logical or virtual network device instance) may include one or more network devices 10A (e.g., a device 10A) configured to serve as a supervisor for group 12, and may include one or more network devices 10B (e.g., devices 10B-1 and 10B-2) configured to serve as a worker for group 12. In some instances, aggregation group 12 may include an additional network device 10A configured to serve as a standby supervisor, while the network device 10A shown in FIG. 1 is configured to serve as an active supervisor. In general, network devices 10 may be referred to as members of aggregation group 12.

Configured with different roles, different network devices 10 may perform operations corresponding to those roles. As just a few examples, an active supervisor network device 10A may be configured to locally perform control plane operations or other operations (e.g., management operations) that control the various functionalities of local data plane components (e.g., packet processors), the various functionalities of remote data plane components (e.g., packet processors) on corresponding remote network devices (e.g., worker network devices 10B), and the various functionalities associated with aggregation group 12 as a whole. A standby supervisor network device may perform operations to facilitate the switchover of active supervisor operations originally performed by the active supervisor network device, when desired. A worker network device 10B may offload the majority of control plane and/or management operations to supervisor network device 10A and perform minimal local control plane and/or management operations. Accordingly, worker network device 10 may mainly perform traffic processing operations using local data plane components.

Network devices 10 of aggregation group 12 may be communicatively coupled (e.g., with or without intervening devices) to one another using communication links 11. These links 11 form a fabric of interconnecting links between aggregated network devices 10 in aggregation group 12 and are consequently referred to herein as network device aggregation group fabric links 11 (sometimes referred to as fabric links 11). As shown in FIG. 1, fabric link(s) 11-1 may communicatively couple device 10A to device 10B-1, group fabric link(s) 11-2 may communicatively couple device 10A to device 10B-2, group fabric link(s) 11-3 may communicatively couple device 10B-1 to device 10B-2.

Network devices 10 of aggregation group 12 may be communicatively coupled to devices external to aggregation group 12 using non-aggregation-group-fabric links 13 (sometimes referred to as non-fabric links 13). In particular, each aggregation group network device 10 (e.g., device 10A, device 10B-1, device 10B-2, etc.) may be communicatively coupled to one or more group-external network devices 14 via corresponding non-fabric link(s) 13-1 and/or may be communicatively coupled to one or more hosts 16 (e.g., on host devices such as laptops, computers, cellular telephones, or other client devices, servers, etc.) via corresponding non-fabric link(s) 13-2.

Aggregation group 12 may receive ingress traffic 18 at a corresponding aggregation group exterior-facing interface of any network device 10 and may provide corresponding egress traffic 20 (e.g., replicated, forwarded, and/or otherwise processed version(s) of ingress traffic 18) at one or more corresponding aggregation group exterior-facing interfaces of one or more network devices 10. Fabric links 11 may be used to convey this type of traffic between network devices 10. In some illustrative configurations sometimes described herein as an example, a port stacking tunneling protocol (sometimes referred to as a port extender tunneling protocol) may be used by devices 10 to more efficiently convey and process traffic conveyed within aggregation group 12 using fabric links 11.

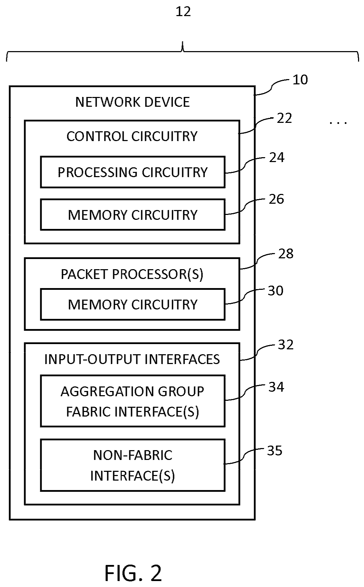

FIG. 2 is a diagram of an illustrative network device 10 in a network device aggregation group 12. For example, different instances of network device 10 shown in FIG. 2 may be used to implement respective network devices 10 in aggregation group 12 in FIG. 1, such as device 10A, device 10B-1, and device 10B-2. While the same functional components (e.g., processing circuitry, memory circuitry, packet processors, interfaces, etc., shown in FIG. 2) may be present in each network device 10 of aggregation group 12, the same type of functional component may be implemented differently (e.g., using different components having different processing capabilities, having different storage capacities, having different specifications, etc.) in different network devices 10 (e.g., in network devices 10 having different roles in aggregation group 12).

As shown in FIG. 2, a network device 10 may include control circuitry 22 having processing circuitry 24 and memory circuitry 26, one or more packet processors 28 and corresponding packet processor memory circuitry 30, and input-output interfaces 32. In some illustrative configurations sometimes described herein as an example, network device 10 may be a fixed-configuration network device (e.g., a fixed-configuration network device having a fixed number of ports and/or a fixed hardware configuration). Accordingly, each network device 10 in aggregation group 12 may have a separate housing or enclosure for its components. If desired, network device 10 may be implemented in other manners (e.g., may be or form be part of a modular network device with removably coupled modules).

Processing circuitry 24 may include one or more processors such as central processing units (CPUs), graphics processing units (GPUs), microprocessors, general-purpose processors, host processors, microcontrollers, digital signal processors, programmable logic devices such as field programmable gate array (FPGA) devices, application specific system processors (ASSPs), application specific integrated circuit (ASIC) processors, and/or other types of processors.

Processing circuitry 24 may run (e.g., execute) a network device operating system and/or other software (including firmware) that is stored on memory circuitry 26 communicatively coupled to processing circuitry 24. Memory circuitry 26 may include one or more non-transitory (tangible) computer-readable storage media that store the operating system software and/or any other software code, sometimes referred to as program instructions, software, data, instructions, or code. As an example, the operations described herein in connection with executing a link-state protocol, maintaining link-state information, obtaining a minimal spanning tree, obtaining floodsets, and/or distributing floodsets may be stored as (software) instructions on the one or more non-transitory computer-readable storage media (e.g., in portion(s) of memory circuitry 26). The corresponding processing circuitry (e.g., one or more processors of processing circuitry 24) may execute the respective instructions to perform the corresponding operations. Memory circuitry 26 may include non-volatile memory device(s) (e.g., solid-state drives, flash memories or other electrically-programmable read-only memories, hard disk drive storage devices, etc.), volatile memory device(s) (e.g., static or dynamic random-access memories), and/or other storage circuitry. Processing circuitry 24 and memory circuitry 26 (e.g., at least some portions of both) as described above may collectively form control circuitry 22 (e.g., implementing a control plane of network device 10). Accordingly, processing circuitry 24 may sometimes be referred to as control plane processing circuitry or one or more control plane processors.

In illustrative configurations sometimes described herein as an example, processing circuitry 24 on a supervisor network device 10A (e.g., network device 10A in FIG. 1) may execute network device control plane software such as operating system software, routing policy management software, routing protocol agents or processes, routing information base agents, and other control software, may be used to support the operation of protocol clients and/or servers, may be used to support the operation of packet processor(s) (e.g., local packet processor(s) and remote packet processor on other network devices of aggregation group 12), may store packet forwarding information, may execute packet processing software, and/or may execute other software instructions that control the functions of network devices 10 in aggregation group 12. Processing circuitry 24 on worker network devices 10B (e.g., network device 10B-1 and 10B-2 in FIG. 1) may execute control plane software that generally offloads the above-mentioned operations to and/or otherwise supports the above-mentioned operations performed by processing circuitry 24 on the supervisor network device 10A. Processing circuitry 24 on worker network devices 10B may perform a subset of above-mentioned (control plane) operations (e.g., operations that rely on local execution on the worker network device 10B).

Packet processor(s) 28 may be used to implement a data plane or forwarding plane of network device 10 and may therefore sometimes be referred to herein as data plane processing circuitry or data plane processor(s). Packet processor(s) 28 may include one or more processors such as application specific integrated circuit (ASIC) processors, programmable logic devices (e.g., field programmable gate array (FPGA) devices), application specific system processors (ASSPs), central processing units (CPUs), graphics processing units (GPUs), microprocessors, general-purpose processors, host processors, microcontrollers, digital signal processors, and/or other types of processors.

A packet processor 28 may receive incoming network packets via input-output interfaces 32 (and/or via network device internal interfaces), parse and analyze the received network packets, process the packets based on packet forwarding decision data and/or in accordance with network protocol(s) or other traffic policy, and/or forward (or drop) the network packet accordingly.

To appropriately process network traffic (e.g., network packets), each packet processor 28 may operate with packet processor memory circuitry 30. Packet processor 28 and memory circuitry 30 may be integrated as parts of the same integrated circuit die (or integrated circuit die package). If desired, packet processor 28 and memory circuitry 30 may be formed as separate discrete processor and memory components (e.g., as a packet processor integrated circuit die and a memory integrated circuit die). In some illustrative configurations described herein as an example, memory circuitry 30 may include ternary content addressable memories (TCAMs). If desired, entries for network traffic matching may be stored in other types of packet processor memory circuitry in addition to or instead of TCAMs. As desired, memory circuitry 30 may include non-volatile memory device(s) (e.g., solid-state drives, flash memories or other electrically-programmable read-only memories, hard disk drive storage devices, etc.), volatile memory device(s) (e.g., static or dynamic random-access memories), and/or other storage circuitry.

To interact with external devices, external systems, and/or users, network device 10 may include input-output interfaces 32 formed using corresponding input-output devices (sometimes referred to as input-output circuitry or interface circuitry). As an example, some input-output interfaces 32 (e.g., those based on wired communication) may be implemented on physical ports. These physical ports may be configured to physically couple to and/or electrically connect to corresponding mating connectors of external components or equipment (e.g., cables, pluggable optical transceiver modules, etc.). Different ports may have different form-factors to accommodate different cables, different modules, different devices, or generally different external equipment. As another example, some input-output interfaces 32 (e.g., those based on wireless communication) may be implemented using wireless communications circuitry (e.g., antennas, transceivers, radios, etc.).

In illustrative configurations sometimes described herein as examples, input-output interfaces 32 may include network device aggregation group fabric interface(s) 34 (sometimes referred to as fabric interface(s) 34) and non-network-device-aggregation-group-fabric interface(s) 35 (sometimes referred to as non-fabric interface(s) 35). Fabric interface(s) 34 may be communicatively coupled to (fabric interface(s) 34 of) other members of aggregation group 12 via corresponding links 11 (e.g., formed using cabling). Non-fabric interface(s) 35 may be communicatively coupled to interfaces of devices external to aggregation group 12 (e.g., devices 14 and/or hosts 16), and if desired, to (non-fabric interface(s) 35 of) other members of aggregation group 12.

In illustrative configurations sometimes described herein as an example, non-fabric interface(s) 35 may include Ethernet interfaces (e.g., formed on front-panel ports) of device 10. Accordingly, non-fabric interface(s) 35 (e.g., when implemented using Ethernet interfaces) may convey (e.g., transmit and/or receive) Ethernet frames having Ethernet frame headers (e.g., thereby forming a part of an Ethernet network). In illustrative configurations sometimes described herein as an example, fabric interface(s) 34 (e.g., formed on fabric ports) does not form a part of the Ethernet network. In particular, fabric interface(s) 34 may be configured to implement other types of protocols, such as a port stacking tunneling protocol, to convey traffic. More specifically, fabric interface(s) 34 (e.g., when implemented with a port stacking tunneling protocol) may convey (e.g., transmit and/or receive) traffic (e.g., packets) carrying a tunneling header in accordance with the port stacking tunneling protocol (and not using an Ethernet frame header as the traffic control information). The inclusion of the tunneling header (e.g., information therein) may help other members of aggregation group 12 receiving the traffic to appropriately and more efficiently process (e.g., forward) the internal traffic within aggregation group 12 (e.g., carried over fabric links 11 and fabric interfaces 34).

These examples of interfaces 32 are merely illustrative. If desired, interfaces 32 may include any suitable set of communication interfaces for connecting device 10 to the Internet, local area network(s), wide area network(s), WLAN network(s), generally network device(s) in these networks and in other networks, and/or other computing equipment (e.g., end hosts, server equipment, administrator devices, etc.).

The components of network device 10 described in connection with FIG. 2 are merely illustrative. If desired, network device 10 may include any other suitable components. As examples, device 10 may include power management and/or supply circuitry and may include a system bus and/or other signal paths that communicatively couple the components of network device 10 to one another, that provide the components of network device 10 with power from the power management and/or supply circuitry, etc. In general, each component of network device 10 may be communicatively coupled to control circuitry 22 (e.g., processing circuitry 24 and/or memory circuitry 26) via one or more signal paths that enable the reception and transmission of control signals, data, and/or other information therebetween.

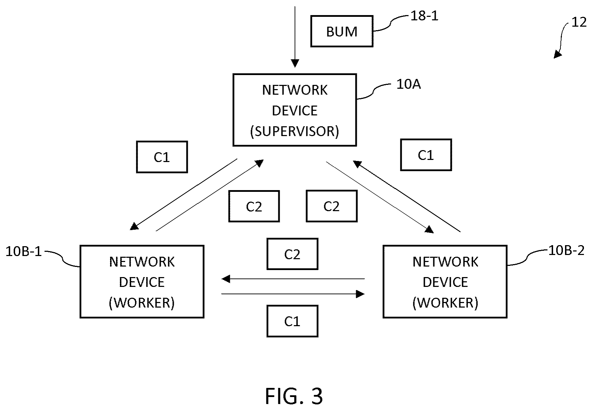

Network devices 10 in aggregation group 12 can receive broadcast, unknown unicast, and/or multicast (BUM) traffic (e.g., broadcast packets, unknown unicast packets, and/or multicast packets). Consider the example shown in FIG. 3 in which network device 10A receives BUM traffic 18-1 as ingress traffic into aggregation group 12 (e.g., from network device 14 or host 16 in FIG. 1). A copy of BUM traffic 18-1 should be distributed to each member of aggregation group 12 such that each member can then distribute the copy of BUM traffic 18-1 to any locally attached hosts 16 and/or network devices 14 intended to be reached by BUM traffic 18-1.

However, if care is not taken, multiple copies of the same BUM traffic 18-1 can undesirably be distributed to some members of aggregation group 12, and consequently to the locally attached hosts 16 and/or network devices 14 of those members. As shown in the example of FIG. 3, when all fabric links 11 (e.g., links 11-1, 11-2, 11-3 in FIG. 1) are enabled and used, the ingress network device 10A can distribute a first copy C1 of BUM traffic 18-1 to network device 10B-1 (e.g., using corresponding fabric interfaces 34 of both devices and over link 11-1 in FIG. 1) and can distribute a second copy C2 of BUM traffic 18-1 to network device 10B-2 (e.g., using corresponding fabric interfaces 34 of both devices and over link 11-2 in FIG. 1). Network device 10B-1 may further distribute the first copy C1 to network device 10B-2 (e.g., using corresponding fabric interfaces 34 of both devices and over link 11-3 in FIG. 1). Network device 10B-2 may further distribute the second copy C2 to network device 10B-1 (e.g., using corresponding fabric interfaces 34 of both devices and over link 11-3 in FIG. 1). Lastly, network device 10B-2 may further distribute the first copy C1 back to network device 10A (e.g., using corresponding fabric interfaces 34 of both devices and over link 11-2 in FIG. 1). Network device 10B-1 may further distribute the second copy C2 back to network device 10A (e.g., using corresponding fabric interfaces 34 of both devices and over link 11-1 in FIG. 1). Both copies C1 and C2 will be dropped by network device 10A, since device 10A was the ingress network device from which both copies C1 and C2 originated (e.g., was flooded). This forwarding of BUM traffic 18-1 is undesirable as devices 10B-1 and 10B-2 both received two copies of the same BUM traffic 18-1 (and consequently performed delivery of duplicative BUM traffic to any locally attached hosts and/or network devices intended to be reached by BUM traffic 18-1).

While this undesired forwarding of BUM traffic is described in connection with a network device aggregation group configuration containing three network devices 10 in a loop topology (shown in FIG. 3), similar issues (e.g., duplicative BUM traffic delivery, packet storm, etc.) may arise in other topologies (e.g., a larger loop topology with more than three devices 10, a spine-leaf topology with multiple spine network devices 10 and multiple leaf network devices 10 and with a link between each spine-leaf network device pair, etc.) and/or in other network configurations.

While mechanisms such as those provided based on a spanning tree protocol (STP) may help eliminate loops in the forwarding topology such that BUM traffic can be appropriately handled (e.g., with no undesired delivery of duplicative traffic, with no packet storm, etc.), in some network configurations, implementation of STP may not be desired or may not be practical or possible. As an example, when a set of network device interfaces are not connected over an Ethernet network conveying Ethernet frames (e.g., when fabric interfaces 34 used to connect devices 10 in aggregation group 12 do not convey Ethernet frames), deployment of STP for these interfaces may not be possible.

Similarly, while mechanisms such as those provided based on a protocol independent multicast (PIM) protocol may help distribute packets for multicast traffic (e.g., from a source to multiple receivers for a given multicast group), in some network configurations, implementation of the PIM protocol may not be desired. As an example, network device resource constraints (e.g., control circuitry constraints on worker network devices 10B in aggregation group 12) with maintenance overhead and added complexities (e.g., with the additional use of the PIM protocol) may deter the execution of the PIM protocol on at least some network devices in certain network configurations (e.g., worker network devices 10B in aggregation group 12).

To provide a different mechanism by which BUM traffic can be properly handled, a set of network devices (e.g., devices 10 in aggregation group 12) may use link-state information (e.g., populated based on a link-state protocol) to generate floodsets usable to defining forwarding topology for BUM traffic, thereby facilitating the proper handling of BUM traffic. While certain network device limitations are described above, the existence of these network device limitations are merely illustrative. In general, a set of network devices with or without the above-mentioned limitations (e.g., not implementing or implementing STP, not implementing or implementing the PIM protocol, etc.) may use this mechanism based on link-state information to generate floodsets usable to facilitate proper handling of BUM traffic.

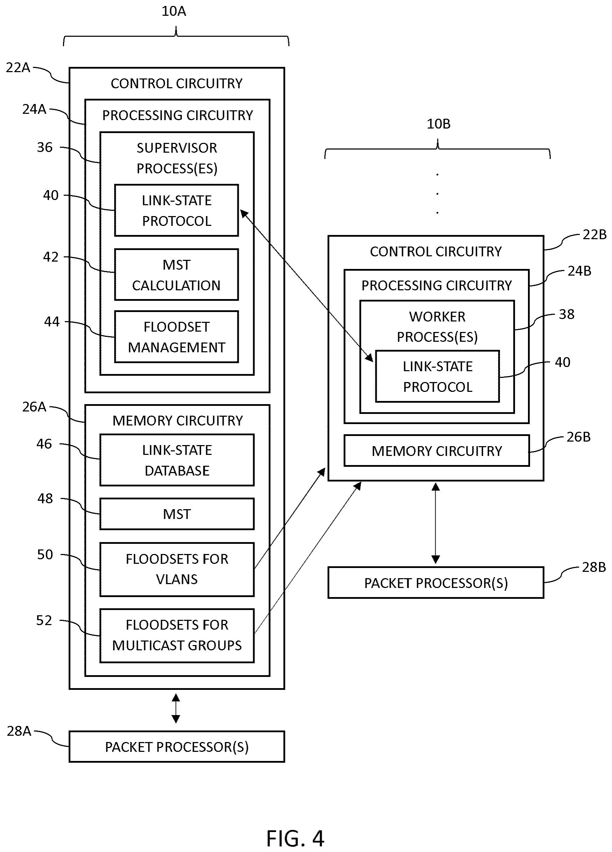

FIG. 4 is a diagram of illustrative network device control circuitry configured to generate floodsets based on link-state information. In illustrative configurations sometimes described herein as an example, the control circuitry of an (active) supervisor network device in a network device aggregation group (e.g., aggregation group 12) may be configured to generate the floodset(s) and distribute the floodsets appropriately to other members of the network device aggregation group. This example is merely illustrative. If desired, other network device(s) (e.g., a worker network device, a standby supervisor network device, etc.) may include control circuitry configured to perform the operations described in connection with the (active) supervisor network device control circuitry in FIG. 4.

As shown in the example of FIG. 4, a supervisor network device 10A (e.g., network device 10A in FIG. 1) may include control circuitry 22A (e.g., control circuitry 22 in FIG. 2 when implemented in device 10A) with processing circuitry 24A (e.g., processing circuitry 24 in FIG. 2 when implemented in device 10A) and memory circuitry 26A (e.g., memory circuitry 26 in FIG. 2 when implemented in device 10A) and may include packet processor(s) 28A (e.g., packet processor(s) 28 in FIG. 2 when implemented in device 10A). Although not explicitly shown in FIG. 4, device 10A may also include its own set of input-output interfaces 32 (FIG. 2), including fabric interfaces 34 each communicatively coupled to a corresponding fabric interface 34 of another member of aggregation group 12, such as one or more worker network devices 10B.

Each worker network device 10B (e.g., each of network devices 10B-1 and 10B-2 in FIG. 1) may include control circuitry 22B (e.g., control circuitry 22 in FIG. 2 when implemented in device 10B) with processing circuitry 24B (e.g., processing circuitry 24 in FIG. 2 when implemented in device 10B) and memory circuitry 26B (e.g., memory circuitry 26 in FIG. 2 when implemented in device 10B) and may include packet processor(s) 28B (e.g., packet processor(s) 28 in FIG. 2 when implemented in device 10B). Although not explicitly shown in FIG. 4, each device 10B may also include its own set of input-output interfaces 32 (FIG. 2), including fabric interfaces 34 each communicatively coupled to a corresponding fabric interface 34 of another member of aggregation group 12, such as a supervisor network device 10A and/or one or more other worker network devices 10B.

As shown in FIG. 4, processing circuitry 24A of device 10A may be configured to execute one or more supervisor processes 36 (e.g., by executing corresponding software instructions stored on memory circuitry 26A) to perform one or more supervisor operations described in connection with processing circuitry 24 in FIG. 2. In particular, processing circuitry 24A (e.g., as part of executing process(es) 36) may implement (e.g., execute) a link-state (routing) protocol 40 (e.g., an open shortest path first (OSPF) protocol, an intermediate system-to-intermediate system (IS-IS) protocol, or another type of link-state protocol). Similarly, processing circuitry 24B of each device 10B may be configured to execute one or more worker processes 38 (e.g., by executing corresponding software instructions stored on memory circuitry 26B) to perform one or more worker operations described in connection with processing circuitry 24 in FIG. 2. In particular, processing circuitry 24B (e.g., as part of executing process(es) 38) may implement (e.g., execute) the same link-state protocol 40.

As part of the operations performed in connection with link-state protocol 40, processing circuitry 24A of device 10A may be configured to exchange link-state messages (e.g., link-state advertisements and/or other protocol messages in connection with protocol 40) with other network devices in the same aggregation group 12, such as worker devices 10B, that are executing corresponding instances of link-state protocol 40 thereon. The exchange of these link-state messages and other information with other members of aggregation group 12 may occur using fabric interfaces 34 and over fabric links 11 (may occur through packet processor(s) 28A). In particular, processing circuitry 24A may receive link-state messages from other members of aggregation group 12 (e.g., worker network devices 10B) and use the information therein to construct and maintain (e.g., store and update) a link-state database 46 on memory circuitry 26A. A link-state message advertised by a given member of aggregation group 12 (e.g., a worker device 10B, another supervisor device 10A, etc.) may include information on local links of the advertising member (e.g., information on corresponding fabric links 11 local to the advertising member) and may identify the advertising member (e.g. by including an identifier, such as an address, of the advertising network device). As examples, link information in a link-state message can include, for each link, a link identifier, a link status, and/or other link characteristics (e.g., link performance metrics).

The links (and corresponding information therefor) advertised by each other member of aggregation group 12 in a corresponding link-state message may be processed by processing circuitry 24A (e.g., as part of executing link-state protocol 40). The link information and the information on (e.g., identifier of) the advertising network device may be identified in link-state database 46 as link-state information. Because each member of aggregation group 12 executes an instance of link-state protocol 40, the link-state information obtained by processing circuitry 24A may indicate all available (fabric) links 11 in aggregation group 12 (e.g., after an appropriate period of time after which advertisements from each member of group 12 have been received). Accordingly, this link-state information for all fabric links 11 may sometimes be referred to as aggregation group link-state information for aggregation group 12.

The aggregation group link-state information in database 46 may characterize and define the physical topology of network device aggregation group 12. Accordingly, processing circuitry 24A may be configured to use this link-state information to calculate, determine, and/or otherwise obtain a minimal spanning tree (MST) (sometimes referred to as a minimum spanning tree) in the physical topology of network device aggregation group 12 (defined by fabric links 11 identified in database 46). In illustrative configurations sometimes described herein as an example, processing circuitry 24A may (e.g., as part of executing supervisor process(es) 36) perform a minimal spanning tree calculation 42 that obtains a minimal spanning tree 48 rooted at the network device performing minimal spanning tree calculation 42 (e.g., the supervisor network device 10A in FIGS. 1 and 4). Processing circuitry 24A may use any suitable technique to perform calculation 42 and obtain minimal spanning tree 48. As just a few examples, processing circuitry 24A may perform calculation 42 based on Prim's algorithm, based on Kruskal's algorithm, and/or based on other techniques.

The obtained minimal spanning tree 48 (e.g., stored on memory circuitry 26A) may identify and be defined or characterized by a set of links (e.g., a subset of the fabric links 11 in aggregation group 12 and identified in database 46) that provides a loop-free forwarding topology spanning each network device 10 in aggregation group 12.

Based on minimal spanning tree 48, different floodsets for forwarding different BUM traffic (e.g., traffic for different broadcast domains, traffic for different multicast groups, etc.) may be generated. In particular, processing circuitry 24A (e.g., as part of executing supervisor process(es) 36) may perform floodset management operation(s) 44 by obtaining, updating, and/or maintaining different floodsets for handling the different BUM traffic.

In illustrative configurations described herein as an example, the different floodsets obtained by processing circuitry 24A may all be based on the same minimal spanning tree 48 (e.g., the same subset of fabric links 11). As an example, processing circuitry 24A may be configured to first obtain a common or general floodset identifying a common subset of fabric interfaces 34 of members of aggregation group 12 for forwarding all BUM traffic (when using the subset of fabric links 11 of minimal spanning tree 48). Processing circuitry 24A may further generate a more specific floodset (e.g., for a particular broadcast domain, for a particular multicast group, etc.) by adding non-fabric interfaces 35 belonging to that broadcast domain or multicast group to the common floodset (e.g., containing only the subset of fabric interfaces 34).

As shown in the example of FIG. 4, processing circuitry 24A may be configured to generate a floodset 50 for each virtual local area network (VLAN) or generally for each broadcast domain by adding corresponding non-fabric interfaces 35 belonging to that VLAN or broadcast domain to the common floodset. Processing circuitry 24A may be configured to generate a floodset 52 for each multicast group by adding corresponding non-fabric interfaces 35 attached to receivers of that multicast group to the common floodset.

To implement these floodsets, processing circuitry 24A of device 10A may program these floodsets 50 and 52 on packet processors 28 of members of aggregation group 12 (e.g., by storing forwarding entries corresponding to floodsets 50 and 52 on memory circuitry 30 for each processor 28). For local packet processor(s) 28A in device 10A, processing circuitry 24A may directly program each processor 28A using floodsets 50 and 52 such that the set of one or more local interfaces 34 (and any interface(s) 35) for flooding (e.g., broadcasting or multicasting) are identified (e.g., stored in memory circuitry 30) for each broadcast domain and for each multicast group is stored and accessible by processor(s) 28A. Accordingly, when BUM traffic corresponding to that broadcast domain or multicast group is received, processor 28A may identify the respective set of local interface(s) for flooding to appropriately forward the BUM traffic (e.g., by forwarding at the identified local interface(s), excluding the ingress interface if present therein, by dropping ingress flood traffic that originated from the local device, etc.).

For remote packet processor(s) in other members of aggregation group 12 (e.g., packet processors 28B in worker network devices 10B), processing circuitry 24A may distribute floodsets 50 and 52 (e.g., at least the local interfaces relevant to each member for floodsets 50 and 52) to each other member of aggregation group 12. Upon receiving the distributed (relevant portion of) floodsets 50 and 52, the control plane processing circuitry (e.g., processing circuitry 24B) may program its local packet processor(s) (e.g., processor(s) 28B) using received floodsets 50 and 52 such that the set of one or more local interfaces 34 (and any interface(s) 35) for flooding (e.g., broadcasting or multicasting) are identified (e.g., stored in memory circuitry 30) for each broadcast domain and for each multicast group is stored and accessible by the packet processor(s) (e.g., processor(s) 28B). Accordingly, when BUM traffic corresponding to that broadcast domain or multicast group is received, the packet processor (e.g., processor 28B) may identify the respective set of local interface(s) for flooding to appropriately forward the BUM traffic (e.g., by forwarding at the identified local interface(s), excluding the ingress interface if present therein, by dropping ingress flood traffic that originated from the local device, etc.).

If desired, processing circuitry 24A of device 10A may repeat at least some (e.g., all) of the operations described in connection with FIG. 4, periodically (e.g., from time to time in response to certain criteria being met). As just a few illustrative examples, based on new link-state messages being received, processing circuitry 24A may update link-state information in database 46; based on the physical topology of aggregation group 12 changing (e.g., based on updated link-state information) and/or generally based on new criteria (e.g., link metrics) being applicable for minimal spanning tree calculations, processing circuitry 24A may perform additional instances of minimal spanning tree calculations 42; and based on VLAN membership changing and/or multicast group receiver attachments changing, processing circuitry 24A may determine updated floodsets 50 and/or 52.

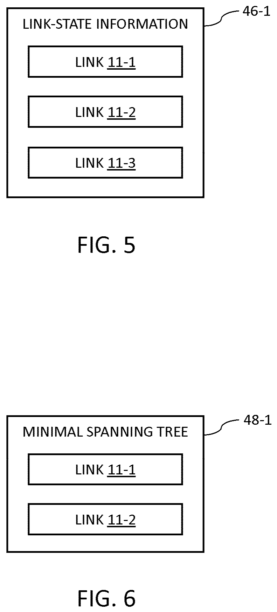

FIGS. 5-8 show illustrative information obtained by network device 10A (FIGS. 1 and 4) when performing the operations described in connection with FIG. 4 as applied to the topology of aggregation group 12 in FIG. 1.

In particular, network device 10A in FIG. 1 may exchange link-state messages with network devices 10B-1 and 10B-2 in FIG. 1. Based on processing link-state messages received from network devices 10B-1 and 10B-2 (e.g., as part of executing link-state protocol 40), processing circuitry 24A of device 10A may obtain link-state information used to populate link-state database 46 (FIG. 4). FIG. 5 is a diagram of illustrative (network device aggregation group) link-state information 46-1 obtained by processing circuitry 24A (FIG. 4) of device 10A (e.g., in network device aggregation group 12 of FIG. 1) and stored in database 46. As shown in FIG. 5, link-state information 46-1 may identify each (available) fabric link 11 in aggregation group 12, such as links 11-1, 11-2, and 11-3. In particular, processing circuitry 24A may identify link 11-1 as a local link of device 10A and/or from link-state message(s) received from device 10B-1 and populate link-state information 46-1 with information on link 11-1. Processing circuitry 24A may identify link 11-2 as a local link of device 10A and/or from link-state message(s) received from device 10B-2 and populate link-state information 46-1 with information on link 11-2. Processing circuitry 24A may identify link 11-3 from link-state message(s) received from device 10B-1 and/or from link-state message(s) received from device 10B-2 and populate link-state information 46-1 with information on link 11-3.

By link-state information 46-1 identifying links 11-1, 11-2, and 11-3 (and identifying corresponding network devices 10B-1 and 10B-2 that advertised links 11-1, 11-2, and 11-3), link-state information 46-1 may be indicative of a physical topology of aggregation group 12. In other words, based on link-state information 46-1, processing circuitry 24A may identify, determine, and/or otherwise obtain the physical topology of aggregation group 12, which is characterized by local device 10A and advertising network devices 10B-1 and 10B-2, link 11-1 between devices 10A and 10B-1, link 11-2 between devices 10A and 10B-2, and link 11-3 between devices 10B-1 and 10B-2.

Processing circuitry 24A of device 10A may further obtain a minimal spanning tree for (e.g., in) the physical topology of aggregation group 12 indicated by link-state information 46-1. FIG. 6 is a diagram of an illustrative minimal spanning tree 48-1 (e.g., an example of tree 48 in FIG. 4) obtained by processing circuitry 24A (FIG. 4) of device 10A (e.g., in network device aggregation group 12 of FIG. 1) and stored in database 46. In particular, minimal spanning tree 48-1 may include and/or otherwise identify links 11-1 and 11-2 (and omit link 11-3). In other words, minimal spanning tree 48-1 provides a loop-free forwarding topology (e.g., defined by links 11-1 and 11-2) in the physical topology of aggregation group 12 usable to forward BUM traffic to each member of aggregation group 12.

Using the loop-free forwarding topology (e.g., the minimal spanning tree), processing circuitry 24A of device 10A may obtain (e.g., generate, identify, etc.) a common floodset (e.g., shared across floodsets 50 for broadcast domains and floodsets 52 for multicast groups) containing common fabric interfaces 34 forming the links identified in the loop-free forwarding topology, may obtain (e.g., generate, identify, etc.) floodsets specific to each broadcast domain and to each multicast group, and may distribute the specific floodsets to members of aggregation group 12.

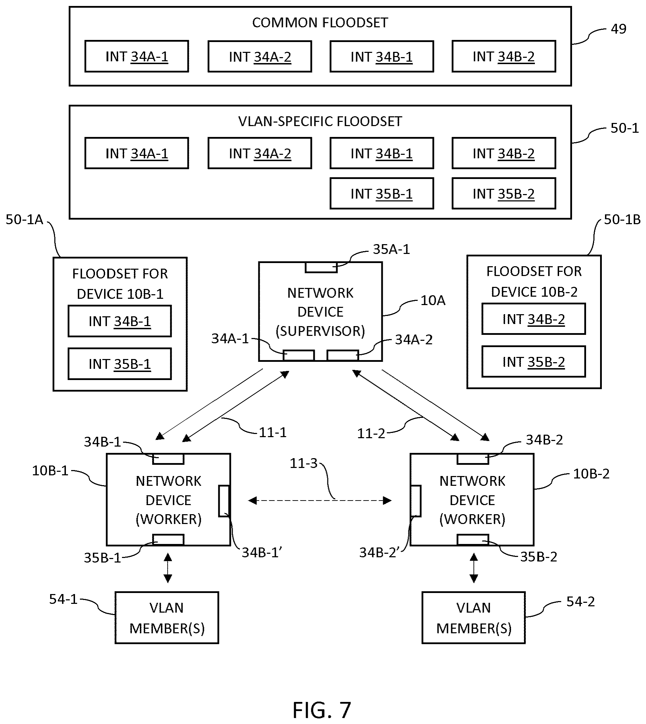

FIG. 7 is a diagram of illustrative floodset information for a given broadcast domain (e.g., a given VLAN) obtained and distributed by processing circuitry 24A of device 10A. As shown in FIG. 7, processing circuitry 24A may obtain (e.g., generate, identify, etc.) a common floodset 49 based on links 11-1 and 11-2 in minimal spanning tree 48-1 (FIG. 6). In particular, common floodset 49 may include (e.g., identify) fabric interfaces 34A-1 and 34B-1 forming fabric link 11-1 and may include (e.g., identify) fabric interfaces 34A-2 and 34B-2 forming fabric link 11-2. Notably, common floodset 49 omits fabric interface 34B-1' of device 10B-1 and fabric interface 34B-2' of device 10B-2 (e.g., because link 11-3 is not part of the loop-free forwarding topology defined by minimal spanning tree 48-1). In illustrative configurations sometimes described herein as an example, the same common floodset 49 may be used by processing circuitry 24A to generate each VLAN-specific floodset 50 (and each multicast group-specific floodset 52).

In the example of FIG. 7, processing circuitry 24A may further obtain (e.g., generate, identify, etc.) a VLAN-specific floodset 50-1 for a particular VLAN having VLAN members 54-1 and 54-2 respectively coupled to non-fabric interface(s) 35B-1 of device 10B-1 and non-fabric interface(s) 35B-2 of device 10B-2. In particular, processing circuitry 24A may add these non-fabric interfaces 35B-1 and 35B-2 to common floodset 49 (originally containing only fabric interfaces 34) to obtain VLAN-specific floodset 50-1.

Processing circuitry 24A may subsequently store a corresponding traffic processing decision data entry based on floodset 50-1, on memory circuitry 30 (FIG. 2) for packet processor(s) 28A of device 10A (e.g., thereby programming or configuring packet processor(s) 28 with floodset 50-1). In particular, the stored entry may identify relevant local interfaces 34A-1 and 34A-2 for transmitting (e.g., flooding) traffic of this VLAN. Accordingly, packet processor(s) 28A of device 10A may access the traffic processing decision data entry to properly forward BUM traffic (or a copy thereof), or more specifically broadcast traffic, for this VLAN (e.g., by flooding or transmitting on any identified interface except the ingress interface, and not if the local device originated the ingress traffic).

Processing circuitry 24A may transmit floodset 50-1 (e.g., relevant portions thereof) to other members of aggregation group 12 (e.g., devices 10B-1 and 10B-2) such that remote packet processor(s) of these other members may also be configured (e.g., programmed) with floodset 50-1. As shown in FIG. 7, processing circuitry 24A may transmit at least a portion 50-1A of floodset 50-1 identifying the interfaces local to device 10B-1, or if desired the entire floodset 50-1, to device 10B-1 for packet processor programming. Processing circuitry 24B of device 10B-1, based on receiving floodset 50-1 (e.g., portion 50-1A), may subsequently store a corresponding traffic processing decision data entry based on floodset 50-1, on memory circuitry 30 (FIG. 2) for packet processor(s) 28B of device 10B-1 (e.g., thereby programming or configuring packet processor(s) 28B with floodset 50-1). In particular, the stored entry may identify relevant local interfaces 34B-1 and 35B-1 for transmitting (e.g., flooding) traffic of this VLAN. Accordingly, packet processor(s) 28B of device 10B-1 may access the traffic processing decision data entry to process ingress BUM traffic (or a copy thereof), or more specifically broadcast traffic, for this VLAN (e.g., by flooding or transmitting on any identified interfaces except the ingress interface, and not if the local device originated the ingress traffic).

As shown in FIG. 7, processing circuitry 24A may transmit at least a portion 50-1B of floodset 50-1 identifying the interfaces local to device 10B-2, or if desired the entire floodset 50-1, to device 10B-2 for packet processor programming. Processing circuitry 24B of device 10B-2, based on receiving floodset 50-1 (e.g., portion 50-1B), may subsequently store a corresponding traffic processing decision data entry based on floodset 50-1, on memory circuitry 30 (FIG. 2) for packet processor(s) 28B of device 10B-2 (e.g., thereby programming or configuring packet processor(s) 28B with floodset 50-1). In particular, the stored entry may identify relevant local interfaces 34B-2 and 35B-2 for transmitting (e.g., flooding) traffic of this VLAN. Accordingly, packet processor(s) 28B of device 10B-2 may access the traffic processing decision data entry to process ingress BUM traffic (or a copy thereof), or more specifically broadcast traffic, for this VLAN (e.g., by flooding or transmitting on any identified interfaces except the ingress interface, and not if the local device originated the ingress traffic).

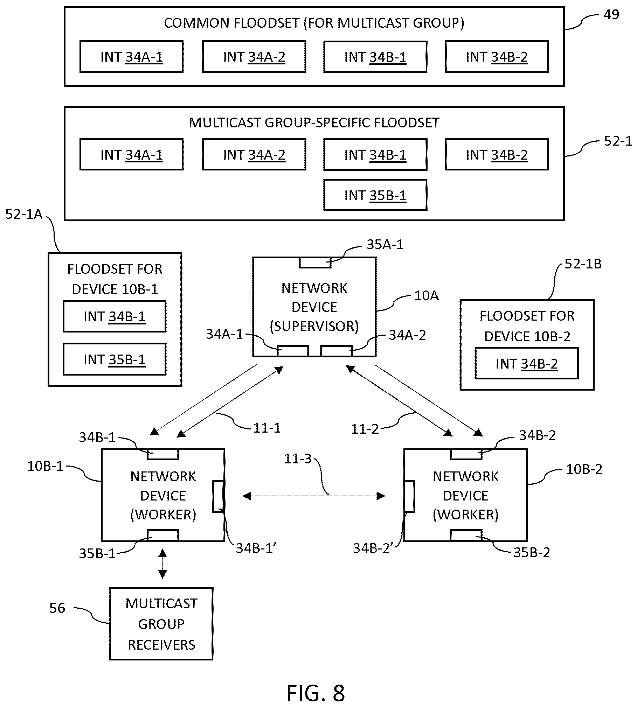

FIG. 8 is a diagram of illustrative floodset information for a given multicast group obtained and distributed by processing circuitry 24A of device 10A. As shown in FIG. 8, processing circuitry 24A may obtain (e.g., generate, identify, etc.) a common floodset 49 (e.g., the same common floodset 49 as in FIG. 7) based on links 11-1 and 11-2 in minimal spanning tree 48-1 (FIG. 6). In particular, common floodset 49 may include (e.g., identify) fabric interfaces 34A-1 and 34B-1 forming fabric link 11-1 and may include (e.g., identify) fabric interfaces 34A-2 and 34B-2 forming fabric link 11-2.

In the example of FIG. 8, processing circuitry 24A may further obtain (e.g., generate, identify, etc.) a multicast group-specific floodset 52-1 for a particular multicast group having multicast group receivers 56 respectively coupled to corresponding non-fabric interfaces 35B-1 of device 10B-1. In particular, processing circuitry 24A may add these non-fabric interfaces 35B-1 to common floodset 49 (originally containing only fabric interfaces 34) to obtain multicast group-specific floodset 52-1.

Processing circuitry 24A may subsequently store a corresponding traffic processing decision data entry based on floodset 52-1, on memory circuitry 30 (FIG. 2) for packet processor(s) 28A of device 10A (e.g., thereby programming or configuring packet processor(s) 28 with floodset 52-1). In particular, the stored entry may identify relevant local interfaces 34A-1 and 34A-2 for transmitting (e.g., flooding) traffic of this multicast group. Accordingly, packet processor(s) 28A of device 10A may access the traffic processing decision data entry to properly forward BUM traffic (e.g., multicast traffic) for this multicast group (e.g., by flooding or transmitting on any identified interface except the ingress interface, and not if the local device originated the ingress traffic).

Processing circuitry 24A may transmit floodset 52-1 (e.g., relevant portions thereof) to other members of aggregation group 12 (e.g., devices 10B-1 and 10B-2) such that remote packet processor(s) of these other members may also be configured (e.g., programmed) with floodset 52-1. As shown in FIG. 8, processing circuitry 24A may transmit at least a portion 52-1A of floodset 52-1 identifying the interfaces local to device 10B-1, or if desired the entire floodset 52-1, to device 10B-1 for packet processor programming. Processing circuitry 24B of device 10B-1, based on receiving floodset 52-1 (e.g., portion 52-1A), may subsequently store a corresponding traffic processing decision data entry based on floodset 52-1, on memory circuitry 30 (FIG. 2) for packet processor(s) 28B of device 10B-1 (e.g., thereby programming or configuring packet processor(s) 28B with floodset 52-1). In particular, the stored entry may identify relevant local interfaces 34B-1 and 35B-1 for transmitting (e.g., flooding) traffic of this multicast group. Accordingly, packet processor(s) 28B of device 10B-1 may access the traffic processing decision data entry to process ingress BUM traffic (or a copy thereof), or more specifically multicast traffic, for this multicast group (e.g., by flooding or transmitting on any identified interfaces except the ingress interface, and not if the local device originated the ingress traffic).

As shown in FIG. 8, processing circuitry 24A may transmit at least a portion 52-1B of floodset 52-1 identifying the interface local to device 10B-2, or if desired the entire floodset 52-1, to device 10B-2 for packet processor programming. Processing circuitry 24B of device 10B-2, based on receiving floodset 52-1 (e.g., portion 52-1B), may subsequently store a corresponding traffic processing decision data entry based on floodset 52-1, on memory circuitry 30 (FIG. 2) for packet processor(s) 28B of device 10B-2 (e.g., thereby programming or configuring packet processor(s) 28B with floodset 52-1). In particular, the stored entry may identify relevant local interface 34B-2 for transmitting (e.g., flooding) traffic of this multicast group. Accordingly, packet processor(s) 28B of device 10B-2 may access the traffic processing decision data entry to process ingress BUM traffic (or a copy thereof), or more specifically multicast traffic, for this multicast group (e.g., by flooding or transmitting on the identified interface except when it is also the ingress interface, and not if the local device originated the ingress traffic).

Depending on the configuration of a multicast group (e.g., the placement of the source and the receivers), the use of a large common floodset 49 (e.g., common even with broadcast domains) may be inefficient. Accordingly, if desired, based on information obtained on the configuration of a multicast group (e.g., attachment location of the source and receivers), processing circuitry 24A of device 10A may also prune interfaces from the common floodset (in addition to adding any non-fabric interfaces coupled to receivers) to generate the multicast group-specific floodset.

Illustrative configurations in which the same minimal spanning tree and consequently the same common floodset is used across multiple VLANs and multicast groups are merely illustrative. If desired, different minimal spanning trees (e.g., rooted at different members and/or having different branches) and consequently different base floodsets (identifying only fabric interfaces) may be used (e.g., generated by processing circuitry 24A of device 10A for use in the manner described in connection with FIGS. 4-8) for different VLANs, different multicast groups, and/or generally for different BUM domains. In general, processing circuitry 24A of device 10A may update the minimal spanning tree as desired (e.g., re-calculated periodically over time, based on path metrics or generally based on network dynamics, etc.).

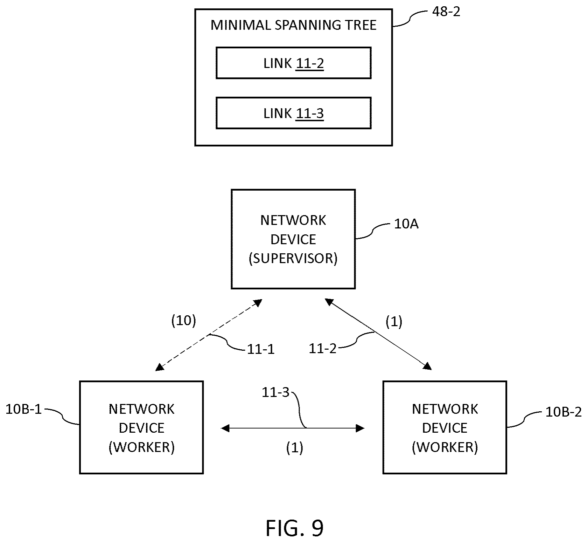

In some illustrative configurations (e.g., those described in connection with FIGS. 4 and 6), processing circuitry 24A of device 10 may obtain a minimal spanning tree in the physical topology of a network device aggregation group based on links of the physical topology having (e.g., being assigned) the same cost. In other illustrative configurations, processing circuitry 24A of device 10A may assign different link costs when determining a minimal spanning tree in a physical topology of a network device aggregation group. In particular, as shown in FIG. 9, processing circuitry 24A of device 10A may identify and assign different link costs for different fabric links 11 (e.g., based on link status information and/or link metrics information conveyed in link-state messages from other members of aggregation group 12, and/or using other techniques). In the example of FIG. 9, link 11-1 may be assigned or otherwise associated with a cost of 10, and links 11-2 and 11-3 may each be assigned or otherwise associated with a cost of 1. In this example, a cost of 10 may indicate high(er) congestion (e.g., high bandwidth usage) of path 11-1. Accordingly, based on these link costs, processing circuitry 24A may obtain a minimal spanning tree 48-2 rooted at device 10A that includes links 11-2 and 11-3 (instead of links 11-1 and 11-3 in tree 48-1 in FIG. 6). Processing circuitry 24A may subsequently obtain floodsets based on minimal spanning tree 48-2 (e.g., in a similar manner as described in connection with FIGS. 4 and 6-8 for spanning tree 48-1).

Link costs may be dynamically assigned (e.g., as link metrics change over time). Accordingly, at a first time (e.g., when there is no congestion on link 11-1), processing circuitry 24A may obtain minimal spanning tree 48-1 (FIG. 6) based on equal cost assignments to links 11-1, 11-2, and 11-3 and derive floodsets based on tree 48-1, but at a second time (e.g., when there is congestion on link 11-1), processing circuitry 24A may obtain minimal spanning tree 48-2 (FIG. 9) based on a higher cost assigned to link 11-3 (as shown in FIG. 9) and derive floodsets based on tree 48-2. Furthermore, at a third time (e.g., once the congestion on link 11-1 is resolved), processing circuitry 24A may again obtain minimal spanning tree 48-1 (FIG. 6) based on equal cost assignments to links 11-1, 11-2, and 11-3 and derive floodsets based on tree 48-1.

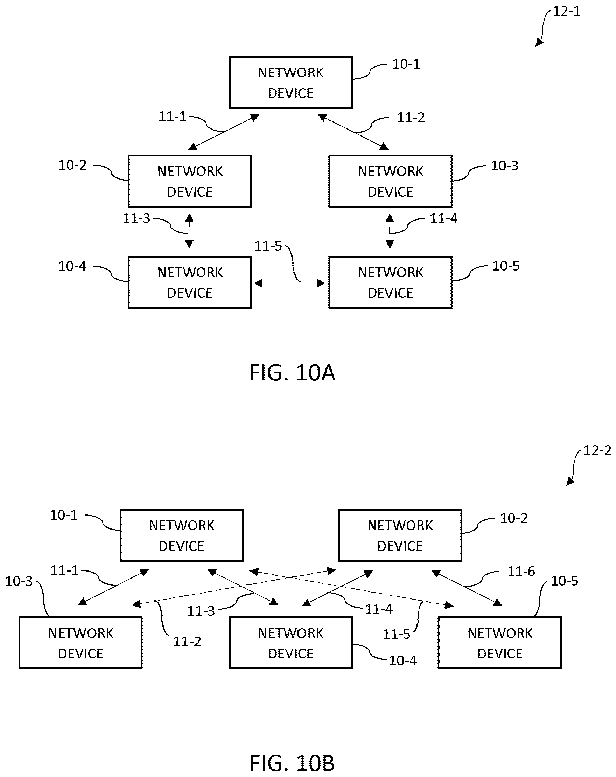

The physical topology of the network device aggregation group 12 (having three network devices in a ring topology) described in connection with FIGS. 1-9 is merely illustrative. The operations described in connection with FIGS. 1-9 may similarly be applicable to other physical topologies of network device aggregation groups. FIGS. 10A and 10B show two additional illustrative physical topologies of network device aggregation groups.

In the example of FIG. 10A, an illustrative physical topology of a network device aggregation group 12-1 may include network devices 10-1, 10-2, 10-3, 10-4, and 10-5 (e.g., with one supervisor 10A and four worker network devices 10B) arranged in a ring topology. Fabric links 11-1, 11-2, 11-3, 11-4, and 11-5 may communicatively couple corresponding pairs of fabric interfaces at respective network devices.

As an example, network device 10-1 (serving as supervisor network device 10A in group 12-1) may perform the operations described in connection with FIG. 4. In particular, network device 10-1 may obtain link-state information identifying each of links 11-1, 11-2, 11-3, 11-4, and 11-5, may obtain a minimal spanning tree rooted at device 10-1 (e.g., containing links 11-1, 11-2, 11-3, and 11-4 and omitting link 11-5), may obtain floodsets for different VLANs and multicast groups based on the obtained minimal spanning tree, may program local packet processor(s) of device 10-1 with the floodsets, and may distribute the floodsets to devices 10-2, 10-3, 10-4, and 10-5 for remote packet processor programming, among other operations described in connection with FIG. 4 to facilitate proper BUM traffic handling.

In the example of FIG. 10B, an illustrative physical topology of a network device aggregation group 12-2 may include network devices 10-1, 10-2, 10-3, 10-4, and 10-5 (e.g., with one supervisor 10A and four worker network devices 10B) arranged in two device layers (e.g., a spine layer including devices 10-1 and 10-2 and a leaf layer including devices 10-3, 10-4, and 10-5. Fabric links 11-1, 11-2, 11-3, 11-4, 11-5, and 11-6 may communicatively couple corresponding pairs of fabric interfaces at respective network devices.

As an example, network device 10-1 (serving as supervisor network device 10A in group 12-2) may perform the operations described in connection with FIG. 4. In particular, network device 10-1 may obtain link-state information identifying each of links 11-1, 11-2, 11-3, 11-4, 11-5, and 11-6, may obtain a minimal spanning tree rooted at device 10-1 (e.g., containing links 11-1, 11-3, 11-4, and 11-6 and omitting links 11-2 and 11-5), may obtain floodsets for different VLANs and multicast groups based on the obtained minimal spanning tree, may program local packet processor(s) of device 10-1 with the floodsets, and may distribute the floodsets to devices 10-2, 10-3, 10-4, and 10-5 for remote packet processor programming, among other operations described in connection with FIG. 4 to facilitate proper BUM traffic handling.

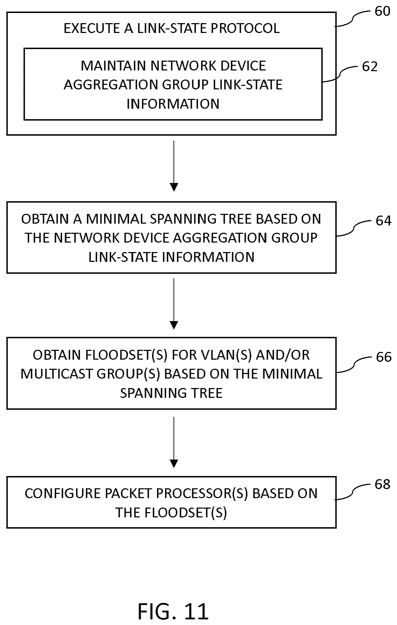

FIG. 11 is a flowchart of illustrative operations for facilitating BUM traffic handling using link-state information. In particular, these operations may be performed by one or more processors 24 of network device 10 (FIG. 2), such as one or more processors 24A of supervisor device 10A, using other components of network device 10 (e.g., other components of device 10A, such as memory circuitry 26A, interfaces 32 including fabric interfaces 34 and non-fabric interfaces 35, etc.). If desired, in other illustrative configurations, these operations of FIG. 11 may be performed by one or more processors 24B of worker device 10B, using other components of device 10B, such as memory circuitry 26B, interfaces 32 including fabric interfaces 34 and non-fabric interfaces 35, etc.

In some configurations described herein as an illustrative example, at least some (e.g., all) of the operations described in connection with FIG. 11 may be performed by one or more processors (e.g., processing circuitry 24A or processing circuitry 24B) executing software instructions stored on memory circuitry (e.g., one or more non-transitory computer-readable storage media of memory circuitry 26A or of memory circuitry 26B). If desired, one or more operations described in connection with FIG. 11 may be performed by and/or use dedicated hardware (processors) of network device 10A or 10B.

At block 60, processing circuitry of a network device (e.g., control plane processing circuitry 24A) of supervisor device 10A may execute a link-state protocol (e.g., link-state protocol 40 in FIG. 4). As part of the execution of the link-state protocol, at block 62, the processing circuitry may maintain network device aggregation group link-state information (e.g., in database 46 of FIG. 4) based on receiving and processing link-state messages advertised by other members of the network device aggregation group (and local link information). The link-state information may identify all of the fabric links of the network device aggregation group and therefore the physical topology of the network device aggregation group. As an example, the operations performed at blocks 60 and 62 may include operations described in connection with FIGS. 4, 5, 10A, and 10B for executing protocol 40, maintaining database 46, and obtaining link-state information 46-1.

At block 64, the processing circuitry may obtain a minimal spanning tree based on the link-state information obtained at block 62. Because the link-state information identifies all of the fabric links that collectively define the physical topology of the network device aggregation group, the processing circuitry may identify a subset of fabric links defining the minimal spanning tree in the physical topology. The minimal spanning tree defines a loop-free forwarding topology for the network device aggregation group (e.g., based on which BUM traffic can be forwarded). As an example, the operations performed at block 64 may include operations described in connection with FIGS. 4, 6, 9, 10A, and 10B for obtaining minimal spanning tree 48 (FIG. 4), an illustrative minimal spanning tree 48-1 (FIG. 6), and an illustrative minimal spanning tree 48-2 (FIG. 9).

At block 66, the processing circuitry may obtain floodset(s) for different VLAN(s) (or broadcast domain(s)) and/or for different multicast group(s) based on the minimal spanning tree obtained at block 64. In particular, the processing circuitry may identify a common set of fabric interfaces using the links of the minimal spanning tree. This common set of fabric interfaces may form a common floodset. The processing circuitry may add VLAN-specific non-fabric interfaces to the common floodset to generate VLAN-specific floodsets and/or may add multicast group-specific non-fabric interfaces to the common floodset to generate multicast group-specific floodsets. As an example, the operations performed at block 66 may include operations described in connection with FIGS. 4, 7, 8, 10A, and 10B for obtaining floodsets 50 and 52 (FIG. 4), an illustrative VLAN-specific floodset 50-1 (FIG. 7), and an illustrative multicast-group specific floodset 50-2 (FIG. 8).

At block 68, the processing circuitry may configure packet processor(s) (e.g., on the local device and/or on remote devices) based on the floodset(s) obtained at block 66. For configuring remote packet processor(s) located on remote network devices of the aggregation group, this may involve distributing the floodset(s) (e.g., relevant portion(s) thereof) to the remote network devices. As an example, the operations performed at block 68 may include operations described in connection with FIGS. 4, 7, 8, 10A, and 10B for programming packet processor(s) with entries for floodsets 50 and 52 (FIG. 4), illustrative VLAN-specific floodset 50-1 (FIG. 7), and illustrative multicast-group specific floodset 50-2 (FIG. 8).

The methods and operations described above in connection with FIGS. 1-11 may be performed by the components of one or more network devices and/or other networking equipment of a network using software (including firmware) and/or hardware. Software code for performing these operations may be stored on one or more non-transitory computer-readable storage media (e.g., tangible computer-readable storage media) on one or more of the components of the network device(s) and/or other networking equipment. The software code may sometimes be referred to as software, data, instructions, program instructions, or code. The one or more non-transitory computer-readable storage media may include drives, non-volatile memory such as non-volatile random-access memory (NVRAM), removable flash drives or other removable media, other types of random-access memory, etc. Software stored on the non-transitory computer readable-storage media may be executed by processing circuitry on one or more of the components of the network device(s) and/or other networking equipment (e.g., processing circuitry 24 of network device 10, processing circuitry 24A of network device 10A, processing circuitry 24B of network device 10B, etc.).

In accordance with an embodiment, a network device includes memory circuitry, and processing circuitry coupled to the memory circuitry and configured to receive link-state messages advertised by a set of additional network devices, maintain, on the memory circuitry, link-state information based on the received link-state messages, obtain a minimal spanning tree based on the link-state information, and obtain a floodset for processing broadcast, unknown unicast, or multicast (BUM) traffic based on the minimal spanning tree.

In accordance with another embodiment, the network device is optionally configured to form a network device aggregation group with the additional network devices.

In accordance with another embodiment, the link-state information optionally identifies a set of fabric links indicative of a physical topology of the network device aggregation group.

In accordance with another embodiment, the minimal spanning tree is optionally obtained by identifying a subset of fabric links in the set of fabric links, the subset of fabric links being optionally indicative of a loop-free forwarding topology of the network device aggregation group.

In accordance with another embodiment, the minimal spanning tree is optionally obtained by assigning different link costs to at least two links in the set of fabric links.

In accordance with another embodiment, the floodset optionally identifies fabric interfaces of the network device aggregation group forming the subset of fabric links.

In accordance with another embodiment, the floodset is optionally for a given broadcast domain and identifies at least one non-fabric interface and where the at least one non-fabric interface is optionally coupled to a member of the given broadcast domain.

In accordance with another embodiment, the floodset is optionally for a given multicast group and identifies at least one non-fabric interface and where the at least one non-fabric interface is optionally coupled to a receiver of the multicast group.

In accordance with another embodiment, the minimal spanning tree is optionally for a first BUM domain and where the processing circuitry is optionally configured to obtain, based on the link state information, an additional minimal spanning tree for a second BUM domain that is optionally different from the minimal spanning tree for the first BUM domain.

In accordance with another embodiment, the processing circuitry is optionally configured to execute a link-state protocol to maintain the link-state information based on the received link-state messages.

In accordance with another embodiment, the link-state protocol is optionally an open shortest path first protocol or an intermediate system-to-intermediate system protocol.

In accordance with an embodiment, a network device operable with additional network devices to form a network device aggregation group, the network device includes a fabric interface configured to communicatively couple to a given additional network device of the additional network devices, memory circuitry, and processing circuitry coupled to the fabric interface and the memory circuitry and configured to receive, using the fabric interface, a link-state message advertised by the given additional network device, maintain, on the memory circuitry, link-state information based on the received link-state message, the link-state information identifying a set of fabric links of the network device aggregation group, and obtain, based on the link-state information and based on a subset of fabric links in the set of fabric links, a floodset for processing broadcast, unknown unicast, or multicast (BUM) traffic.

In accordance with another embodiment, the network device optionally includes a packet processor coupled to the fabric interface, where the subset of fabric links optionally include a fabric link coupling the network device to the given additional network device, the floodset identifies the fabric interface, and the processing circuitry is optionally configured to program the packet processor with the floodset by identifying the fabric interface for forwarding the BUM traffic.

In accordance with another embodiment, the processing circuitry is optionally configured to provide at least a portion of the floodset, including an identified fabric interface of the given additional network device, to the given additional network device for programming a packet processor of the given additional network device.

In accordance with another embodiment, the floodset optionally identifies at least one non-fabric interface of the network device or at least one non-fabric interface of the given additional network device.

In accordance with another embodiment, the network device is optionally a supervisor network device in the network device aggregation group.

In accordance with another embodiment, the network device is optionally a worker network device in the network device aggregation group.

In accordance with an embodiment, a network device includes memory circuitry, and processing circuitry coupled to the memory circuitry and configured to receive link-state messages advertised by a set of additional network devices, maintain, on the memory circuitry, link-state information based on the received link-state messages, the link-state information identifying a set of links, identify, based on the link-state information, a subset of links in the set of links, and obtain a set of interfaces for forwarding broadcast, unknown unicast, or multicast (BUM) traffic based on the identified subset of links.

In accordance with another embodiment, the network device is optionally one of a plurality of network devices that form a network device aggregation group, where the set of links optionally include fabric links that interconnect the plurality of network devices, and the subset of links is optionally a subset of the fabric links.

In accordance with another embodiment, the set of interfaces optionally include fabric interfaces of the members of the network device aggregation group used to form the subset of links and include at least one non-fabric interface of one of the members of the network device aggregation group.

The foregoing is merely illustrative and various modifications can be made to the described embodiments. The foregoing embodiments may be implemented individually or in any combination.

## Claims

1. A network device comprising:
memory circuitry; and
processing circuitry coupled to the memory circuitry and configured to:
receive link-state messages advertised by a set of additional network devices;
maintain, on the memory circuitry, link-state information based on the received link-state messages;
obtain a minimal spanning tree based on the link-state information; and
obtain a floodset for processing broadcast, unknown unicast, or multicast (BUM) traffic based on the minimal spanning tree.

2. The network device defined in claim 1, wherein the network device is configured to form a network device aggregation group with the additional network devices.

3. The network device defined in claim 2, wherein the link-state information identifies a set of fabric links indicative of a physical topology of the network device aggregation group.

4. The network device defined in claim 3, wherein the minimal spanning tree is obtained by identifying a subset of fabric links in the set of fabric links, the subset of fabric links being indicative of a loop-free forwarding topology of the network device aggregation group.

5. The network device defined in claim 4, wherein the minimal spanning tree is obtained by assigning different link costs to at least two links in the set of fabric links.

6. The network device defined in claim 4 or claim 5, wherein the floodset identifies fabric interfaces of the network device aggregation group forming the subset of fabric links.

7. The network device defined in claim 6, wherein the floodset is for a given broadcast domain and identifies at least one non-fabric interface and wherein the at least one non-fabric interface is coupled to a member of the given broadcast domain.

8. The network device defined in claim 6, wherein the floodset is for a given multicast group and identifies at least one non-fabric interface and wherein the at least one non-fabric interface is coupled to a receiver of the multicast group.

9. The network device defined in any preceding claim, wherein the minimal spanning tree is for a first BUM domain and wherein the processing circuitry is configured to obtain, based on the link state information, an additional minimal spanning tree for a second BUM domain that is different from the minimal spanning tree for the first BUM domain.

10. The network device defined in any preceding claim, wherein the processing circuitry is configured to execute a link-state protocol to maintain the link-state information based on the received link-state messages.

11. The network device defined in claim 10, wherein the link-state protocol is an open shortest path first protocol or an intermediate system-to-intermediate system protocol.

12. The network device defined in any preceding claim, further comprising:
a fabric interface configured to communicatively couple to a given additional network device of the set of additional network devices, wherein the processing circuitry is configured to receive, using the fabric interface, a given link-state message of the link-state messages advertised by the given additional network device and wherein the link-state information is maintained based on the given link-state message.

13. The network device defined in claim 12 further comprising:
a packet processor coupled to the fabric interface, wherein the link-state information identifies a set of fabric links, including a given fabric link coupling the network device to the given additional network device, wherein the floodset identifies the fabric interface, and wherein the processing circuitry is configured to program the packet processor with the floodset.

14. The network device defined in claim 12 or claim 13, wherein the processing circuitry is configured to provide at least a portion of the floodset, including a fabric interface of the given additional network device, to the given additional network device for programming a packet processor of the given additional network device.

15. The network device defined in any of claims 12 to 14, wherein the floodset identifies at least one non-fabric interface of the network device or at least one non-fabric interface of the given additional network device.
